# EUROPÄISCHE PATENTSCHRIFT

(11) **EP 2 518 460 B1**
(45) Veröffentlichungstag und Bekanntmachung des Hinweises auf die Patenterteilung: **29.04.2020**
(21) Anmeldenummer: 12002086.2
(22) Anmeldetag: 23.03.2012
(51) Int. Cl.: G01J 3/10, H01J 61/40, G01J 3/02, H01J 5/16

(54) **Lampenmodul mit einer Deuterium-Lampe**
Lamp module with a deuterium lamp
Module de lampe avec lampe au deutérium

(30) Priorität: 28.04.2011 DE 102011018986
(43) Veröffentlichungstag der Anmeldung: 31.10.2012
(73) Patentinhaber: Heraeus Noblelight GmbH, 63450 Hanau (DE)
(72) Erfinder: Jenek, Torsten, 60594 Frankfurt (DE)
(74) Vertreter: Heraeus IP

(56) Entgegenhaltungen:
- EP-A2- 0 916 937
- CN-Y- 2 861 710
- US-A- 4 049 987
- US-A- 4 049 987
- US-A- 4 812 657
- US-A- 4 910 431

## Beschreibung

Die Erfindung betrifft ein Lampenmodul insbesondere für Spektralanalysevorrichtungen, umfassend einen Lampenaufnahmekörper, der zur Aufnahme einer Deuteriumlampe mit einem Lampenkolben aus synthetischem Quarzglas einen Hohlraum mit einer Strahlaustrittsöffnung aufweist, die mit einem optischen Durchstrahlungselement verschlossen ist.

Spektralanalysevorrichtungen erfordern eine hohe optische Stabilität im Sinne eines kontinuierlichen, linienfreien Spektrums im gewünschten Wellenlängenbereich. Deuteriumlampen sind bevorzugte Strahlungsquellen für die UV-Spektroskopie, da sie sehr intensive UV-Strahlung im Bereich 180 nm bis etwa 400 nm emittieren. Um ein erweitertes Spektrum abzudecken wird zu der Deuteriumlampe eine zweite Lampe, - in der Regel eine Halogenlampe -, mit einem Spektrum bis in den sichtbaren Bereich dazu geschaltet. Das Spektrum eines derartig kombinierten Lampenmoduls liegt im Wellenlängenbereich zwischen180 nm und 1100 nm.

Ein Problem beim Einsatz von Deuteriumlampen besteht in der Ozonbildung durch die Strahlungsanteile des Deuteriumplasmas unterhalb von 190 nm. Diesem Problem kann begegnet werden, indem für die Lampenkolben der Deuteriumlampe ein spezielles Borosilikatglas, ein so genanntes "UV-Glas" ausgewählt wird, das Strahlung mit einer Wellenlänge kleiner 190 nm absorbiert. Das UV-Glas weist aber keinen steilen Absorptionsverlauf auf, sondern dieser flacht zum langwelligeren Bereich hin ab. Dadurch wird auch noch ein Teil der Arbeitsstrahlung zwischen 190 nm und 280 nm im Lampenkolben absorbiert und steht daher für die spektralanalytischen Zwecke nicht zur Verfügung.

Bei einer anderen Variante von Deuteriumlampen wird ein Lampenkolben aus synthetischem Quarzglas eingesetzt, der ganz oder teilweise mit einer Schicht bedeckt ist, die als Interferenz- oder Absorptionsfilter für Wellenlängen unterhalb von 190 nm wirkt. Dieser Lampentyp wird als "ozonfrei" definiert, das keine Strahlung einer Ozon generierenden Wellenlänge aus dem Lampenkolben austritt. Jedoch ist die direkte Aufbringung der ozonunterdrückenden Filterschicht auf dem Lampenkolben aufwändig und bietet hinsichtlich der weiteren Gestaltung des Lampenmoduls wenig Spielraum.

Es sind darüber hinaus auch Deuteriumlampen ohne Ozonfilter auf dem Markt, bei denen bei Arbeiten im kurzwelligen Spektralbereich das entstehende Ozon nach außen zwangsentlüftet wird oder ein so genannter Ozonabsorber das Ozon vor dem Austritt in die Umgebung hindert.

### Stand der Technik

Aus der DE 39 02 144 A1 ist eine Deuteriumlampe mit einem Quarzglaskolben bekannt. Der Teilbereich des Lampenkolbens, durch den die erzeugte Strahlung hindurch tritt, ist auf seiner Außenseite mit einem ozonunterdrückenden Filter bedeckt. Es handelt sich um einen Interferenzfilter mit Schichtaufbau, wobei die einzelnen Schichten durch Aufdampfen in Hochvakuumanlagen aufgebracht werden. Diese Auftragsverfahren in Dünnschichttechnik sind kostenintensiv und sind insbesondere für die Herstellung homogener Schichtstrukturen auf gekrümmten Oberflächen nicht uneingeschränkt geeignet. Zudem ist die thermische Belastung dieser Filterschichten direkt auf der Oberfläche des Lampenkolbens im Einsatz sehr hoch, so dass es bereits bei der Herstellung und insbesondere bei längerem Gebrauch dieser Lampen zu einer Schädigung des Filters kommen kann.

US 4 049 987 A betrifft einen Ozonabsorbationsregler für eine Ultraviolettlichtquelle.

CN 2 861 710 Y betrifft einen tragbaren Multifunktionsstrahler.

US 4 910 431 A beschreibt eine Wasserstoffentladungslampe.

US 4 812 657 A betrifft Spektrofotometer mit einer Röhre zum Abstrahlen von ultraviolettem und sichtbarem Licht.

EP 0 916 937 A2 betrifft eine Vorrichtung und ein Verfahren zum Messen einer Wasserstoffperoxiddampf- oder -gas-konzentration.

Weiterhin ist aus EP 1 186 828 A1 eine Deuteriumlampe ohne Ozonfilter bekannt.

Der Lampenkolben ist in einem Lampenaufnahmekörper aus Aluminium untergebracht, das von rückwärtiger Seite durch einen Kühlungsventilator mit einem Luftstrom zwangsgekühlt wird. Der Lampenaufnahmekörper um den Lampenkolben herum ist bis auf eine kleine, mit einer Kondensorlinse ausgestatteten Öffnung für den Strahlaustritt vollständig geschlossen. An dem Strahlaustrittsfenster des Lampengehäuses befindet sich ein Anschlussstück, das die Strahlung nach außen führt. Der Luftstrom des Ventilators kühlt beziehungsweise temperiert im Wesentlichen den Lampenaufnahmekörper, erreicht aber die kurzwellige Strahlung in der röhrenförmigen Stahlaustrittsöffnung nicht, so dass dort und auch direkt am Lampenkolben kein Ozon entstehen kann. Da aber das aus der Strahlaustrittsöffnung nach außen austretende Spektrum dieser Lampe auch Wellenlängen kleiner 180 nm umfasst, wird die Ozonbildung außerhalb des Lampenmoduls nicht verhindert.

Ein ähnlicher Lampenaufbau ist auch aus der EP 1 201 984 A1 bekannt. Hier ist jedoch zusätzlich zur Deuteriumlampe noch eine Halogenlampe vorgesehen, um ein erweitertes Wellenlängenspektrum für die Spektralanalyse zur Verfügung zu haben. Derartige Systeme werden auch als UV-VIS-Module bezeichnet, da das Spektrum bis in den sichtbaren Bereich (VIS = visible) reicht.

Deuteriumlampe und Halogenlampe sind hintereinander auf einer gemeinsamen optischen Achse angeordnet. Der Lampenaufnahmekörper des Lampenkolbens der Deuteriumlampe weist in der optischen Achse eine Strahleintrittsöffnung für die Strahlung der hinter der Deuteriumlampe angeordneten Halogenlampe und eine gemeinsame Strahlaustrittsöffnung auf. Beide Lampenkolben können auch im gleichen Lampenaufnahmekörper untergebracht sein. Die Kühlung mittels Ventilator ist auch hier an der Rückseite des Lampengehäuses angeordnet und wirkt auf die aus der Strahlaustrittsöffnung austretende Strahlung nicht. Da kein Ozonfilter vorgesehen ist, wird - wie auch bei der Lampe gemäß EP 1 186 828 A1 - nur die Ozonbildung innerhalb der Lampe unterdrückt, nicht aber außerhalb der Lampe.

### Technische Aufgabenstellung

Der Erfindung liegt die Aufgabe zugrunde ein Lampenmodul mit einer Deuteriumlampe mit Ozonfilter bereitzustellen, das eine lange Lebensdauer zeigt, kostengünstig herstellbar ist und eine hohe Intensität im Wellenlängenbereich zwischen 190 nm und 250 nm gewährleistet.

### Allgemeine Beschreibung der Erfindung

Diese Aufgabe wird ausgehend von einer Deuteriumlampe der eingangs genannten Gattung erfindungsgemäß durch das in Anspruch 1 offenbarte Lampenmodul gelöst.

Bei der erfindungsgemäßen Deuteriumlampe wird ein Lampenkolben aus synthetischem Quarzglas verwendet, das eine exzellente UV-Durchlässigkeit auch im kurzwelligen Bereich bis etwa 150 nm gewährleistet. Der VUV-Kantenfilter absorbiert die kurzwellige UV-Strahlung mit Wellenlängen kleiner 190 nm, die ansonsten zur Ozonbildung außerhalb des Lampenmoduls führen könnte. Auf eine entsprechende Beschichtung des Quarzglas-Lampenkolbens mit einem Ozonfilter kann daher verzichtet werden. Dadurch bestehen vielfältige Möglichkeiten, den Lampenkolben im Gehäuse oder Lampenaufnahmekörper des Lampenmoduls anzuordnen. Der Quarzglas-Lampenkolben ist somit ein Standardbauteil, das eine kostengünstige Komponente für die Herstellung des Lampenmoduls darstellt. Die Abkürzug VUV steht für Vakuum-Ultraviolett und bezeichnet den Spektralbereich von etwa 100 nm bis etwa 190 nm.

Da der Lampenkolben von dem Lampenaufnahmekörper umschlossen ist und eine Abdichtung gegenüber der Außenluft besteht, wird nur ein kleines Luftvolumen zwischen Quarzglaskolben und Gehäuseinnenraum eingeschlossen. In diesem eng begrenzten Raum ist Ozonbildung durch die aus dem Quarzglaskolben austretende kurzwellige Strahlung möglich und führt dort sehr schnell zu einer gesättigten Atmosphäre, die kaum Konvektion ausgesetzt ist und daher keine Wirkung auf die Stabilität der aus dem Lampenmodul austretenden Strahlung hat.

Von entscheidender Bedeutung ist, dass durch den in der Strahlaustrittsöffnung angeordneten VUV-Kantenfilter die Ozonbildung durch scharfes Ausfiltern des Wellenlängenbereichs kleiner 190 nm in der Außenumgebung des Lampenmoduls verhindert. Der Filter zeigt daher eine hohe Transmission im Wellenlängenbereich oberhalb von 190 nm, so dass das für spektralanalytische Zwecke nutzbare Spektrum bei dem erfindungsgemäßen Lampenmodul für die meisten Anwendungen dennoch groß genug ist.

Infolge der Anordnung des Filters in einem Abstand von der Oberfläche des Quarzglaskolbens ist dieser einer geringen thermischen Belastung ausgesetzt, was seine Lebensdauer und damit auch die des gesamten Lampenmoduls deutlich verlängert.

Bei dem die Strahlaustrittsöffnung verschließenden optischen Durchstrahlungselement handelt es sich beispielsweise um eine Kondensorlinse oder um eine einfache Scheibe, die lediglich als optisches Fenster dient.

Erfindungsgemäß ist der Lampenkolben in den Hohlraum des Lampenaufnahmekörpers unter Belassung eines Spalts eingefügt, dessen Spaltweite im Bereich zwischen 0,5 mm und 5 mm liegt.

Außerdem hat es sich als vorteilhaft erwiesen, wenn das optische Durchstrahlungselement in der Strahlaustrittsöffnung in einem Abstand vom Lampenkolben von maximal 20 mm angeordnet ist.

Durch diese geometrische Auslegung des Raumes um den Lampenkolben herum und zur Strahlauskopplung hin werden die Einflüsse der in diesem Volumen auftretenden Ozonbildung minimiert. Es wird bei dieser Anordnung schnell eine Sättigung der Ozonatmosphäre erreicht, so dass sich keine zeitlich veränderlichen Auswirkungen auf die austretende Strahlung ergeben. Etwaige Intensitätsverluste durch Ozonabsorption im Bereich zwischen 200 nm und 300 nm werden durch eine möglichst kurze optische Weglänge innerhalb der gesättigten Ozonatmosphäre minimiert. Darüber ergibt sich eine optimale Kühlwirkung wenn der kühlbare Lampenaufnahmekörper in geringem Abstand zur Lampenkolbenoberfläche verläuft.

Eine weitergehende Optimierung im Hinblick auf eine vollständige Unterdrückung der Ozonbildung innerhalb des Lampenaufnahmekörpers kann erreicht werden, wenn der Spalt unter Vakuum gehalten wird oder mit einem sauerstofffreien Gas gefüllt ist.

Als sauerstofffreie Gase sind Stickstoff oder auch Edelgase geeignet.

Vorzugsweise ist der Lampenaufnahmekörper als metallischer Kühlköper ausgebildet.

Je nach Betriebsweise des Lampenmoduls wird der Lampenkolben schnell sehr heiß und muss gekühlt werden. Ist der Lampenaufnahmekörper aus Metall ausgeführt - beispielsweise als Aluminiumbauteil - wirkt das gut Wärme leitende Metall als Kühlkörper, so dass auf eine zusätzliche Ventilation oder andere Kühlmaßnahmen verzichtet werden kann, was einen wirtschaftlichen Betrieb des Lampenmoduls erleichtert.

In einer bevorzugten Ausführungsform ist der Kantenfilter direkt auf der Oberfläche des optischen Durchstrahlungselements in der Strahlaustrittsöffnung angeordnet.

Diese Ausführungsform hat den Vorteil, dass im optischen System die Anzahl der Grenzflächen, durch die die Strahlung hindurchtreten muss beziehungsweise an denen Strahlung absorbiert wird, gegenüber einem separaten Kantenfilter verringert wird und im Vergleich dazu der Anteil an nutzbarer Strahlung um bis zu etwa 8 % höher liegt. Außerdem können solche Kantenfilter mittels kostengünstiger Verfahren auf Linsen oder ebenen Fenstern aufgetragen werden.

Eine Alternative für die Anordnung des Kantenfilters besteht darin, dass der Filter in einem Abstand von der Oberfläche des optischen Durchstrahlungselements in der Strahlaustrittsöffnung angeordnet ist.

Diese Anordnung hat den Vorteil, dass der Kantenfilter als eigenständiges Bauteil eingesetzt werden und auch bei Bedarf ausgetauscht werden kann. Filterplättchen dieser Art sind robust und ihre Montage in der Strahlaustrittsöffnung ist einfach. Sie liegen beispielsweise als Platte aus absorbierendem Filterglas vor oder in Form einer Platte aus synthetischem Quarzglas vor, das mit dem Filtermaterial beschichtet ist. Da das separate Filterbauteil - im Gegensatz zum Lampenkolben - kaum mechanischen Belastungen ausgesetzt ist, kann es wesentlich dünner sein, als die Wandung des Lampenkolbens. Bevorzugte Dicken des Filterbauteils liegen im Bereich von 0,1 bis 1 mm, besonders bevorzugt maximal 0,3 mm. wegen der geringeren Dicke ist die Transmission für die gewünschte optische Strahlung beim Filterbauteil größer als beim Lampenkolben.

Vorteilhafterweise ist der VUV-Kantenfilter ein Absorptionsfilter oder ein Interferenzfilter oder eine Kombination dieser beiden Filtertypen.

Absorptionsfilter bestehen aus einem absorbierenden Werkstoff, wie beispielsweise einem UV-absorbierenden Glas. Sie sind kostengünstig, zeigen aber häufig eine wenig steile Absorptionskante, die materialabhängig und nicht veränderbar ist. Diese Nachteile vermeiden Interferenzfilter, wie sie beispielsweise in der DE 39 021 44 A1 beschrieben sind. Diese bestehen aus einem beschichteten Grundwerkstoff, wobei die Lage der Absorptionskante über die Dicke der Beschichtung beeinflusst werden kann.

Es hat sich bewährt, wenn der Kantenfilter ein Mehrfachschichtmaterial umfasst.

Bei einem Kantenfilter aus einem Mehrfachschichtmaterial kann die Lage und Steilheit der Absorptionskante an die konkreten Anforderungen besser angepasst und optimiert werden. Zudem wird durch Mehrfachschichten die so genannte "Welligkeit" der Filterwirkung im Bereich der Transmissionswellenlänge verringert, die auf Interferenzeffekte zurückzuführen ist.

Die Absorptionskante des Kantenfilters liegt bevorzugt im Bereich von 180 nm bis 200 nm.

Um den Austritt von Ozon aus dem Lampengehäuse zu vermindern oder zu verhindern, ist die Strahlaustrittsöffnung vorzugsweise außen abgedichtet ist.

Bei geringen Anforderungen an die Dichtheit kann hierfür ein feines Gewinde zwischen der Kondensorlinse und dem Lampengehäuse genügen.

Im Hinblick auf eine Erweiterung des Wellenlängenbereichs wird eine Ausführungsform des Lampenmoduls besonders bevorzugt, bei dem im Hohlraum des Lampenaufnahmekörpers eine zweite Spektral-Lampe angeordnet ist, deren Strahl durch den Lampenkolben der Deuteriumlampe hindurch zur Strahlaustrittsöffnung gelenkt wird.

Für die Spektralphotometrie ist es vorteilhaft, wenn der Wellenlängenbereich des nutzbaren Spektrums möglichst breit ist. Der Einsatz einer zweiten Spektral-Lampe mit anderem Emissionsspektrum als die Deuteriumlampe kommt dieser Anforderung entgegen. Überdies kann von Fall zu Fall auch nur eine der beiden Spektral-Lampen zum Einsatz kommen, so dass ein derartiges Lampenmodul flexibel einsetzbar ist.

Für die Spektralphotometeranwendung hat es sich bewährt, wenn die zweite Spektral-Lampe eine Halogenlampe oder eine LED ist.

Der typischerweise bei Halogenlampen genutzte Wellenlängenbereich der Strahlung liegt zwischen 350 und 1100 nm. Somit deckt die Kombination mit einer Deuteriumlampe ein breites Spektrum von 190 nm bis 1100 nm ab.

### Ausführungsbeispiel

Nachfolgend wird die Erfindung anhand von Ausführungsbeispielen und einer Zeichnung näher erläutert. Es zeigt dabei in schematischer Darstellung im Einzelnen:
- **Figur 1**: eine Ausführungsform des erfindungsgemäßen Lampenmoduls in einer Seitenansicht im Schnitt mit einem Filter direkt auf der Oberfläche der Kondensorlinse, und
- **Figur 2**: eine weitere Ausführungsform des erfindungsgemäßen Lampenmoduls in einer Seitenansicht im Schnitt mit einem von der Kondensorlinse beabstandeten Filter.

### Beispiel 1

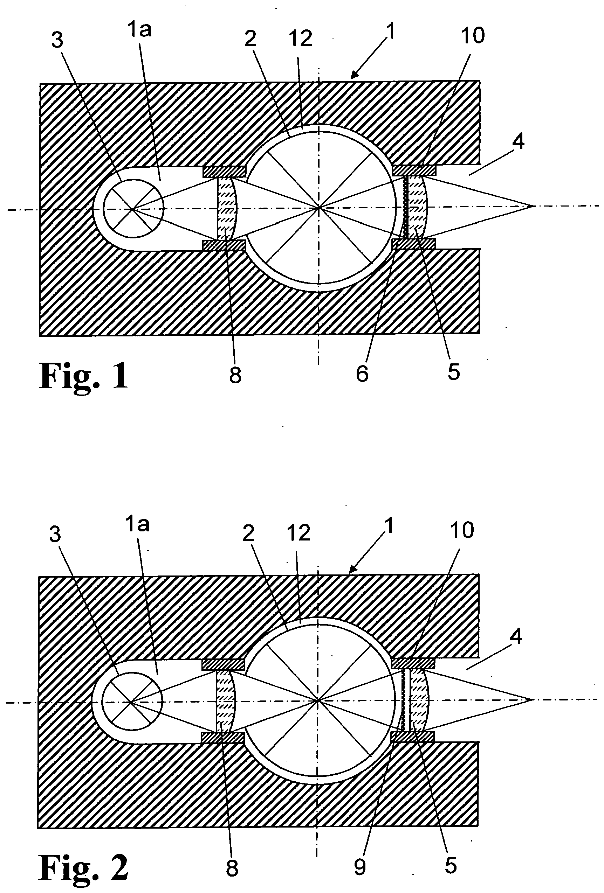

Die in **Figur 1** in schematischer Darstellung gezeigte Ausführung des erfindungsgemäßen Lampenmoduls weist einen aus Aluminium bestehenden Lampenaufnahmekörper 1 auf, der als Kühlköper dient. Der Lampenaufnahmekörper 1 hat einen Hohlraum 1a, in den ein oder mehrere Spektrallampen einsetzbar sind. Im konkreten Fall sind im Hohlraum 1a des Lampenaufnahmekörpers 1 eine Deuteriumlampe mit Quarzglas-Lampenkolben 2 und auf derselben optischen Achse eine Halogenlampe mit dem Lampenkolben 3 eingesetzt.

Der Lampenkolben 2 der Deuteriumlampe besteht aus synthetischem Quarzglas. Um die Kühlwirkung des Lampenaufnahmekörpers 1 auf die in seinem Hohlraum 1a eingesetzten Lampenkolben 2 optimal ausnutzen zu können, ist der Lampenkolben 2 unter Belassung eines geringen Spalts 12 zwischen Aufnahmekörper 1 und Lampenkolben 2 in den Lampenaufnahmekörper 1 eingesetzt. Die Spaltweite beträgt etwa 2 mm.

Das Spaltvolumen ist mit Luft gefüllt, so dass in diesem kleinen Volumen durch die aus dem Lampenkolben 2 austretenden Strahlungsanteile mit Wellenlängen <190 nm Ozon gebildet wird. Bei sehr kleinen Volumina ist die Atmosphäre jedoch sehr bald mit Ozon gesättigt, was aber praktisch keinen Einfluss auf die Qualität der aus dem Lampenmodul austretenden Strahlung hat.

Wenn auch in diesem Spaltvolumen die Ozonbildung verhindert werden soll, kann das Spaltvolumen evakuiert oder mit einem sauerstofffreien Gas, wie etwa Stickstoff oder Argon gefüllt oder gespült werden.

Der Lampenaufnahmekörper 1 hat weiterhin in Richtung der zentralen optischen Achse ein Anschlussstück als Strahlaustrittsöffnung 4. In dieser Strahlaustrittsöffnung 4 ist eine plankonvexe Kondensorlinse 5 mit einem auf der dem Lampenkolben 3 zugewandten Seite aufgebrachten VUV-Kantenfilter 6 fixiert. Die Kondensorlinse 5 und der VUV-Kantenfilter 6 bilden ein integrales Bauteil, das auf der optischen Achse des Lampenmoduls im Abstand von etwa 3 mm von der Oberfläche des Lampenkolbens 2 der Deuteriumlampe entfernt angeordnet ist.

Die Fixierung von Kondensorlinse 5 und Filter 6 erfolgt dadurch, dass die Bauteile in einer gedichteten Ringfassung 10 umlaufend in die Strahlaustrittsöffnung 4 eingeklebt werden. Es ist damit gewährleistet, dass kein Luftaustausch zwischen der Umgebung und dem Hohlraum 1a des Lampenaufnahmekörpers 1 stattfinden kann.

Der VUV-Kantenfilter 6 ist ein Interferenzfilter mit einer Mehrfachschichtanordnung. Durch die direkte Anordnung des Filters 6 auf der Kondensorlinse 5 wird die Anzahl der Grenzflächen für die austretende Strahlung minimiert, was den Anteil der nutzbaren Strahlung gegenüber einer Anordnung mit einem von der Kondensorlinse getrennt angeordneten Filter um bis zu 8 % erhöht.

In einer alternativen Ausführungsform besteht der Kantenfilter 6 aus einer Kombination aus Interferenz- und Absorptionsfilter. Dabei wird auf ein Grundbauteil aus einem absorbierenden Werkstoff ein Schichtsystem aus mehreren Interferenzschichten aufgetragen.

An der der Strahlaustrittsöffnung 4 auf der optischen Achse gegenüberliegenden Seite ist, wie anfangs erwähnt, hinter der Deuteriumlampe eine Halogenlampe mit einem Lampenkolben 3 angeordnet. Die aus dem Lampenkolben 3 der Halogenlampe austretende Strahlung wird, gegebenenfalls über eine Linse 8 oder ein Linsensystem gebündelt, durch den Lampenkolben 2 der Deuteriumlampe hindurchgeführt. Somit ergänzen sich die Wellenlängenbereiche der beiden Spektral-Lampen zu einem breiteren Spektrum, das durch den VUV-Kantenfilter 6 in der Strahlaustrittsöffnung 4 des Lampenmoduls nur durch den Wellenlängenbereich kleiner 190 nm beschnitten wird.

### Beispiel 2

Das Lampenmodul gemäß **Figur 2** besteht im Wesentlichen aus der gleichen Anordnung wie im Beispiel 1 beschrieben. Jedoch ist hier der VUV-Kantenfilter 9 als ein selbstragendes Filterplättchen ausgebildet, das in einem Abstand von 3 mm von der plankonvexen Kondensorlinse 5 in der Strahlaustrittsöffnung 4 fixiert ist. Das Filterplättchen 9 ist mit einem Schraubring 10 eingefasst, mittels dem es in der Strahlaustrittsöffnung 4 eingeschraubt ist. Bei alternativen Ausführungsformen ist das Filterplättchen in die Strahlaustrittsöffnung 4 eingeklemmt oder eingeklebt.

In diesem Fall besteht das Filterplättchen 9 aus synthetischem Quarzglas, das mit einer Schicht aus dem Filtermaterial beschichtet ist. Es kann leicht montiert und entnommen werden, so dass auch ein eventueller Ersatz durch einen anderen Filtertyp oder aus Reparaturgründen einfach möglich ist. Die Fixierung ist so gestaltet, dass kein Luftaustausch zwischen der Umgebung und dem Hohlraum 1a des Lampenaufnahmekörpers 1 stattfinden kann. Zu diesem Zweck liegt das Filterplättchen 9 über einen Dichtring an einem Absatz an (nicht dargestellt), gegen den es mittels eines Federringes von der Lampeninnenseite aus gepresst wird, der wiederum in einer Nut in der Strahlenaustrittsöffnung 4 eingelegt ist.

Bei dieser Ausführungsform erübrigt sich eine abdichtende Fixierung der in Richtung Strahlaustritt nach dem VUV-Kantenfilter 9 in der Strahlaustrittsöffnung 4 eingesetzten Kondensorlinse 5, was deren Austausch gegebenenfalls erleichtert.

Der Kantenfilter ist auf der optischen Achse des Lampenmoduls im Abstand von 3 mm von der Oberfläche des Lampenkolbens 2 der Deuteriumlampe angeordnet. Dieses Abstandsmaß sollte nicht überschritten werden, da sonst das in die Strahlaustrittsöffnung 4 bis zum VUV-Kantenfilter 9 erweiterte Spaltvolumen zwischen dem Lampenkolben 2 der Deuteriumlampe und dem Hohlraum 1a des Lampenaufnahmekörpers 1 zu groß wird. Unter diesen Bedingungen kann die dort entstehende Ozonatmosphäre unter Konvektionseinfluss geraten, was wiederum die Stabilität des austretenden Wellenlängenspektrums beeinträchtigen könnte. Zudem wird die Strahlungsintensität durch Absorption in der ozonhaltigen Atmosphäre beeinträchtigt.

Die Ausführungsform des Lampenmoduls mit selbsttragendem VUV-Kantenfilter 9 ist besonders geeignet für einen Einsatz als Strahlenquelle von Spektrometern, in der Flüssigkeitschromatographie (HPLC und UHPLC) in der Kapillarelektrophorese und in der Dünnschichtchromatographie.

## Patentansprüche

1. Lampenmodul für Spektralanalysevorrichtungen, umfassend eine Deuteriumlampe (2), ein optisches Durchstrahlungselement (5), einen VUV-Kantenfilter (6;9) und einen Lampenaufnahmekörper (1), der die Deuteriumlampe (2) mit einem Lampenkolben aus synthetischem Quarzglas in einem Hohlraum (1a) mit einer Strahlaustrittsöffnung (4) aufnimmt, die mit dem optischen Durchstrahlungselement (5) verschlossen ist, **dadurch gekennzeichnet, dass** der Lampenkolben (2) von dem Lampenaufnahmekörper (1) umschlossen ist und eine Abdichtung gegenüber der Außenluft besteht, sodass nur ein kleines Luftvolumen zwischen Lampenkolben (2) und Gehäuseinnenwand eingeschlossen ist, wobei der Lampenkolben in den Hohlraum (12) des Lampenaufnahmekörpers unter Belassung eines Spalts (2a) eingefügt ist,
dessen Spaltweite im Bereich zwischen 0,5 mm und 5 mm liegt,
und dass in der Strahlaustrittsöffnung (4) und auf der der Deuteriumlampe (2) zugewandten Seite des optischen Durchstrahlungselements (5) der VUV-Kantenfilter (6; 9) angeordnet ist, wobei der VUV-Kantenfilter kurzwellige UV-Strahlung mit Wellenlängen kleiner 190 nm absorbiert,
wobei der Kantenfilter (6) direkt auf der Oberfläche des optischen Durchstrahlungselements (5) in der Strahlaustrittsöffnung (4) angeordnet ist
oder wobei der Kantenfilter (9) als Filterplättchen ausgebildet und in einem Abstand von der Oberfläche des optischen Durchstrahlungselements (5) in der Strahlaustrittsöffnung (4) angeordnet ist.

2. Lampenmodul nach Anspruch 1, **dadurch gekennzeichnet, dass** das
optische Durchstrahlungselement (5) in der Strahlaustrittsöffnung (4) in einem Abstand vom Lampenkolben von maximal 20 mm angeordnet ist.

3. Lampenmodul nach einem der vorhergehenden Ansprüche, **dadurch gekennzeichnet, dass** der Lampenaufnahmekörper (1) als metallischer Kühlkörper ausgebildet ist.

4. Lampenmodul nach Anspruch 1, **dadurch gekennzeichnet, dass** das Filterplättchen (9) eine Dicke im Bereich von 0,1 bis 1 mm aufweist.

5. Lampenmodul nach einem der vorhergehenden Ansprüche, **dadurch gekennzeichnet, dass** der Kantenfilter (6; 9) ein Absorptionsfilter oder ein Interferenzfilter oder eine Kombination dieser beiden Filtertypen ist.

6. Lampenmodul nach einem der vorhergehenden Ansprüche, **dadurch gekennzeichnet, dass** der Kantenfilter (6; 9) ein Mehrfachschichtmaterial umfasst.

7. Lampenmodul nach einem der vorhergehenden Ansprüche, **dadurch gekennzeichnet, dass** die Strahlaustrittsöffnung (4) nach außen abgedichtet ist.

8. Lampenmodul nach einem der vorhergehenden Ansprüche, **dadurch gekennzeichnet, dass** in dem Hohlraum (12) des Lampenaufnahmekörpers (1) eine zweite Spektral-Lampe (3) angeordnet ist, deren Strahl durch den Lampenkolben der Deuteriumlampe (2) hindurch zur Strahlaustrittsöffnung (4) gelenkt wird.

9. Lampenmodul nach Anspruch 8, **dadurch gekennzeichnet, dass** die zweite Spektral-Lampe (3) eine Halogenlampe oder eine LED ist.

## Claims

1. A lamp module for spectral analysis devices, comprising a deuterium lamp (2), an optical transmission element (5), a VUV edge filter (6; 9), and a lamp receiving body (1) receiving the deuterium lamp (2) having a lamp bulb made of synthetic quartz glass in a cavity (1a) comprising a beam outlet opening (4) closed by means of the optical transmission element (5), **characterised in that** the lamp bulb (2) is enclosed by the lamp receiving body (1) and a seal against the ambient air exists, so that only a small air volume is trapped between lamp bulb (2) and internal housing wall, wherein the lamp bulb is inserted into the cavity (12) of the lamp receiving body by leaving a gap (2a), the gap width of which lies in the range of between 0.5 mm and 5 mm,
and that the VUV edge filter (6; 9) is arranged in the beam outlet opening (4) and on the side of the optical transmission element (5) facing the deuterium lamp (2), wherein the VUV edge filter absorbs short-wave UV radiation with wavelengths of less than 190 nm,
wherein the edge filter (6) is arranged in the beam outlet opening (4) directly on the surface of the optical transmission element (5),
or wherein the edge filter (9) is formed as filter platelet and is arranged in the beam outlet opening (4) at a distance from the surface of the optical transmission element (5).

2. The lamp module according to claim 1, **characterised in that** the optical transmission element (5) is arranged in the beam outlet opening (4) at a distance of maximally 20 mm from the lamp bulb.

3. The lamp module according to any one of the preceding claims, **characterised in that** the lamp receiving body (1) is formed as metallic cooling body.

4. The lamp module according to claim 1, **characterised in that** the filter platelet (9) has a thickness in the range of from 0.1 to 1 mm.

5. The lamp module according to any one of the preceding claims, **characterised in that** the edge filter (6; 9) is an absorption filter or an interference filter or a combination of these two filter types.

6. The lamp module according to any one of the preceding claims, **characterised in that** the edge filter (6; 9) comprises a multilayer material.

7. The lamp module according to any one of the preceding claims, **characterised in that** the beam outlet opening (4) is sealed to the outside.

8. The lamp module according to any one of the preceding claims, **characterised in that** a second spectral lamp (3), the beam of which is guided through the lamp bulb of the deuterium lamp (2) to the beam outlet opening (4), is arranged in the cavity (12) of the lamp receiving body (1).

9. The lamp module according to claim 8, **characterised in that** the second spectral lamp (3) is a halogen lamp or an LED.

## Revendications

1. Module de lampe pour dispositifs d'analyse spectrale, comprenant une lampe au deutérium (2), un élément d'irradiation optique (5), un filtre à arêtes VUV (6 ; 9) et un corps récepteur de lampe (1) qui contient la lampe au deutérium (2) avec une ampoule de lampe en verre de quartz synthétique dans une cavité (1a) avec une ouverture de sortie du faisceau (4) qui est obturée avec l'élément d'irradiation optique (5), **caractérisé en ce que** l'ampoule de lampe (2) est entourée du corps récepteur de lampe (1) et comprend une étanchéité à l'air extérieur de façon à ce que seulement un petit volume d'air soit inclus entre l'ampoule de lampe (2) et la paroi intérieure du boîtier, l'ampoule de lampe étant insérée dans la cavité (12) du corps récepteur de lampe en laissant un intervalle (2a),
dont la largeur est comprise entre 0,5 mm et 5 mm,
et que le filtre à arêtes VUV (6 ; 9) est disposé dans l'ouverture de sortie du faisceau (4) et sur le côté de l'élément d'irradiation optique (5), tourné vers la lampe au deutérium (2), le filtre à arêtes VUV absorbant un rayonnement ultraviolet à ondes courtes avec des longueurs d'onde inférieures à 190 nm, le filtre à arêtes (6) étant disposé directement à la surface de l'élément d'irradiation optique (5) dans l'ouverture de sortie du faisceau (4) et le filtre à arêtes (9) étant conçu sous forme de plaquette filtrante et étant disposé à une distance de la surface de l'élément d'irradiation optique (5) dans l'ouverture de sortie du faisceau (4).

2. Module de lampe conformément à la revendication n°1, **caractérisé en ce que** l'élément d'irradiation optique (5) dans l'ouverture de sortie du faisceau (4) est disposé à une distance de l'ampoule de lampe de maximum 20 mm.

3. Module de lampe conformément à l'une des revendications précédentes, **caractérisé en ce que** le corps récepteur de lampe (1) est conçu comme corps de refroidissement métallique.

4. Module de lampe conformément à la revendication n°1, **caractérisé en ce que** la plaquette filtrante (9) présente une épaisseur comprise entre 0,1 et 1 mm.

5. Module de lampe conformément à l'une des revendications précédentes, **caractérisé en ce que** le filtre à arêtes (6 ; 9) est un filtre d'absorption ou un filtre antiparasite ou une combinaison de ces deux types de filtres.

6. Module de lampe conformément à l'une des revendications précédentes, **caractérisé en ce que** le filtre à arêtes (6 ; 9) comprend un matériau multi-couches.

7. Module de lampe conformément à l'une des revendications précédentes, **caractérisé en ce que** l'ouverture de sortie du faisceau (4) est étanchéifiée par rapport à l'extérieur.

8. Module de lampe conformément à l'une des revendications précédentes, **caractérisé en ce qu'**une deuxième lampe spectrale (3), dont le rayonnement est dirigé vers l'ouverture de sortie du faisceau (4) par l'ampoule de lampe de la lampe au deutérium (2), est disposée dans la cavité (12) du corps récepteur de lampe (1).

9. Module de lampe conformément à la revendication n°8, **caractérisé en ce que** la deuxième lampe spectrale (3) est une lampe halogène ou une LED.
